# FASCICULE DE BREVET EUROPEEN

(11) **EP 3 122 601 B1**
(45) Date de publication et mention de la délivrance du brevet: **22.08.2018**
(21) Numéro de dépôt: 15720916.4
(22) Date de dépôt: 23.03.2015
(51) Int. Cl.: B60R 21/26, B60R 21/264

(54) **FILTRE POUR GÉNÉRATEUR DE GAZ**
FILTER FÜR EINEN GASGENERATOR
FILTER FOR A GAS GENERATOR

(30) Priorité: 28.03.2014 FR 1452711
(43) Date de publication de la demande: 01.02.2017
(73) Titulaire: Autoliv Development AB, 447 83 Vårgårda (SE)
(72) Inventeur: LOUBOUTIN, Dominique, 29500 Ergué-Gabéric (FR)
(74) Mandataire: Poindron, Cyrille
(86) Numéro de dépôt international: PCT/EP2015/056118
(87) Numéro de publication internationale: WO 2015/144634

(56) Documents cités:
- EP-A2- 0 800 964
- FR-A1- 2 865 172
- US-A1- 2012 247 361

## Description

La présente invention concerne de manière générale un filtre pour générateur de gaz, et en particulier un filtre pour un générateur de gaz pyrotechnique à monter dans un module de sécurité pour un véhicule automobile.

Le filtre selon la présente invention convient pour un générateur de gaz pyrotechnique, c'est-à-dire un générateur de gaz comprenant un chargement de propergol pyrotechnique qui va créer lors de sa combustion l'essentiel des gaz de gonflage du coussin de sécurité associé.

Il est connu dans l'art antérieur des filtres pour de tels générateurs de gaz pyrotechniques, tel que celui divulgué dans le document US7823919B2. Le filtre divulgué comprend un matériau filtrant et se trouve agencé entre une chambre de combustion et des tuyères de décharge du boîtier du générateur de gaz. En contrepartie, ce système présente notamment un premier inconvénient qui consiste en un risque de perturbation du flux de gaz passant par les tuyères de décharge si le filtre est expansé ou dilaté lors de la mise à feu du générateur de gaz. En effet, lors du fonctionnement de l'allumeur, une onde de pression brutale et importante est générée, ce qui peut provoquer une déformation ou expansion du filtre qui peut conduire à une obstruction partielle des tuyères de décharge. Cela peut aussi se produire lors de l'allumage de la matière pyrotechnique contenue dans la chambre de combustion. Le flux de gaz est alors perturbé, ce qui peut provoquer une vitesse de gonflage différente de celle désirée, et donc conduire à une variabilité du fonctionnement du générateur de gaz ; variabilité qui conduit à un surdimensionnement notamment des parois du générateur (et donc un alourdissement) pour garantir la sécurité du générateur dans toutes les conditions de fonctionnement.

Un deuxième inconvénient consiste en ce que le matériau filtrant du filtre en question peut provoquer une variabilité de l'allumage, car une partie des particules chaudes et gaz chauds éjectés par l'allumeur dans le chargement de propergol peut aller directement dans le matériau filtrant. Dans ce cas, ces particules chaudes et gaz chauds ne sont plus en contact intime avec le propergol, ce qui diminue la qualité de l'allumage, et augmente encore la variabilité de fonctionnement.

Le document FR2865172 décrit un générateur de gaz pour un coussin gonflable de protection, et le document EP0800964 décrit un générateur de gaz, sélon le préambule de la revandication 1, pour coussin de sécurité gonflable et coussin de sécurité gonflable.

Un but de la présente invention est de répondre aux inconvénients des documents de l'art antérieur mentionnés ci-dessus et en particulier, tout d'abord, de proposer un filtre avec un matériau filtrant qui ne risque pas de se déformer lors du fonctionnement du générateur de gaz.

Pour cela un premier aspect de l'invention concerne un filtre pour générateur de gaz pyrotechnique comprenant :
- un matériau filtrant,
- un écran de protection,
caractérisé en ce que l'écran de protection forme au moins une boucle scellée agencée pour entourer au moins une partie d'un chargement de propergol du générateur de gaz pyrotechnique, de sorte à protéger ladite au moins une partie du matériau filtrant d'une onde de pression d'allumage du chargement de propergol. Le filtre selon la présente mise en oeuvre comprend un écran de protection avec une boucle fermée. La boucle fermée reprend alors les efforts imposés lors du fonctionnement du générateur de gaz, et notamment lors de la phase d'allumage, avec l'onde de pression générée par l'allumeur et/ou le propergol qui commence à brûler et génère un flux de gaz qui augmente très rapidement. La boucle fermée peut être par exemple une boucle dont les extrémités sont soudées, clinchées ou attachées ou verrouillées entre elles. On peut également envisager un cylindre de matière pour former l'écran de protection, en effet, un tube résiste bien à une sollicitation interne (pression interne, onde de pression interne, si l'allumeur est agencé à l'intérieur).

Avantageusement, le matériau filtrant présente une hauteur, et l'écran de protection recouvre au moins une partie du matériau filtrant située à mi-hauteur. En d'autres termes, l'écran de protection est agencé au moins au milieu de la hauteur du matériau filtrant, ce qui permet de rigidifier le matériau filtrant à l'endroit où il est le plus déformable. En effet, l'écran de protection apporte sa rigidité supplémentaire à mi hauteur du matériau filtrant, là où il peut fléchir et/ou gonfler le plus facilement s'il est maintenu à ses extrémités par le générateur.

Avantageusement, le matériau filtrant est agencé au moins en partie autour de l'écran de protection, et la boucle scellée est agencée pour résister à un effort d'expansion supérieur à un effort d'expansion du matériau filtrant. L'écran de protection forme une ossature de soutient pour le matériau filtrant. Ce dernier peut alors être choisi uniquement pour ses caractéristiques de filtration, car la résistance du filtre (à l'onde de pression notamment) est assurée par l'écran de protection. En d'autres termes, lorsque le filtre est soumis à une pression interne, la déformation radiale du matériau filtrant est plus importante lorsque l'écran de protection n'est pas présent que lorsqu'il est présent. De plus, cette mise en oeuvre permet d'éviter de prévoir un support extérieur tel qu'un cerclage par exemple, pour éviter une expansion du matériau filtrant.

Avantageusement, l'écran de protection est une pièce support distincte du matériau filtrant. La réalisation d'une telle pièce composite permet d'optimiser la fabrication de chacun des sous-composants, avec des machines de fabrication dédiées.

Avantageusement, l'écran de protection est une bande pleine. La protection est optimale, car l'écran de protection fait office de barrière et ne laisse pas passer de flux (pression, particules, gaz) vers le matériau filtrant qui est préservé.

Avantageusement, la bande pleine est exempte de trous sur la longueur de la boucle scellée.

Avantageusement, le matériau filtrant est attaché à la boucle scellée. On peut envisager de souder le matériau filtrant pour l'attacher à l'écran de protection.

Avantageusement, le matériau filtrant présente une forme cylindrique d'une première hauteur.

Avantageusement, l'écran de protection protège le matériau filtrant sur une deuxième hauteur supérieure ou égale à la moitié de la première hauteur. En d'autres termes, l'écran de protection recouvre le matériau filtrant sur au moins la moitié d'une surface qui serait traversée par les gaz de combustion si l'écran de protection n'était pas installé.

Avantageusement, le générateur de gaz pyrotechnique comprend un allumeur électro-pyrotechnique avec au moins un évent radial agencé pour allumer le chargement de propergol,
et l'écran de protection est agencé pour être en regard dudit au moins un évent radial. L'écran de protection est particulièrement utile selon ce mode de réalisation, car, comme dit précédemment, il protège le matériau filtrant d'un flux direct en provenance de l'allumeur (onde de pression, gaz chauds, particules chaudes) et en plus, il provoque un confinement des gaz chauds et particules chaudes au sein du chargement de propergol, en les empêchant d'aller directement dans le matériau filtrant. La répétabilité de l'allumage est améliorée. On peut même noter que les gaz chauds et particules chaudes sont guidés par la paroi de l'écran de protection et vont alors être en contact avec plus de propergol.

Avantageusement, l'écran de protection comprend une bande pleine agencée en regard dudit au moins un évent.

Avantageusement, le matériau filtrant est en fil métallique et/ou en tissus métallique et/ou en tricot métallique et/ou en métal déployé.

Un deuxième aspect de l'invention concerne un générateur de gaz pyrotechnique comprenant :
- une chambre de combustion,
- un chargement de propergol dans la chambre de combustion, pour créer des gaz de gonflage d'un coussin de sécurité,
- un allumeur électro-pyrotechnique agencé pour allumer le chargement de propergol,
- un filtre comprenant un matériau filtrant et un écran de protection,
caractérisé en ce que l'écran de protection forme au moins une boucle scellée agencée pour entourer au moins une partie d'un chargement de propergol du générateur de gaz pyrotechnique, de sorte à protéger ladite au moins une partie du matériau filtrant d'une onde de pression d'allumage du chargement de propergol.

Avantageusement, le générateur de gaz comprend au moins une tuyère de décharge, et l'écran de protection est agencé entre l'allumeur et ladite au moins une tuyère de décharge. On peut noter que le risque de désoperculage des tuyères de décharge par l'onde de pression de l'allumeur est supprimé, car l'écran de protection est entre l'allumeur et les tuyères de décharge. Ainsi, le propergol peut s'allumer correctement et provoquer une montée en pression normale avant le désoperculage. Les risques de déconfinement intempestifs sont réduits. En effet, un déconfinement (une ouverture des tuyères de décharge) trop rapide peut altérer la qualité de l'allumage en créant une baisse de pression dans la chambre de combustion alors que le propergol n'est pas correctement allumé. Par ailleurs, l'écran permet aussi d'agrandir la longueur de parcours des gaz chauds générés par la combustion du propergol à travers le matériau filtrant, améliorant l'efficacité du filtre car les gaz chauds ne peuvent pas traverser le filtre au droit des tuyères (zone préférentielle du fait du parcours plus court) mais doivent contourner l'écran de protection.

Avantageusement, l'allumeur électro-pyrotechnique comprend au moins un évent radial, et l'écran de protection est agencé en regard dudit au moins un évent radial.

Avantageusement, le générateur de gaz comprend au moins une tuyère de décharge, et le matériau filtrant est agencé entre le chargement de propergol et ladite au moins une tuyère de décharge. Cette mise en oeuvre permet d'éviter de prévoir un support extérieur tel qu'un cerclage par exemple, pour éviter une expansion du matériau filtrant, ce qui laisse libre la zone entre le matériau filtrant et la tuyère de décharge.

Un troisième aspect de l'invention est un module de sécurité comprenant au moins un générateur de gaz selon le deuxième aspect et/ou au moins un filtre selon le premier aspect.

Un quatrième aspect de l'invention est un véhicule automobile comprenant au moins un générateur de gaz selon le deuxième aspect et/ou au moins un filtre selon le premier aspect.

D'autres caractéristiques et avantages de la présente invention apparaîtront plus clairement à la lecture de la description détaillée qui suit de trois modes de réalisation de l'invention donnés à titre d'exemple nullement limitatifs et illustrés par les dessins annexés, dans lesquels :
- la figure 1 représente une vue en coupe d'un générateur de gaz pyrotechnique qui comprend un filtre selon la présente invention ;
- la figure 2 représente une vue de dessus d'une première variante du filtre de la figure 1 ;
- la figure 3 représente une vue en coupe d'un générateur de gaz pyrotechnique qui comprend un filtre selon une deuxième variante du filtre de la figure 1 ;
- la figure 4 représente une vue de dessus d'une troisième variante du filtre de la figure 1.

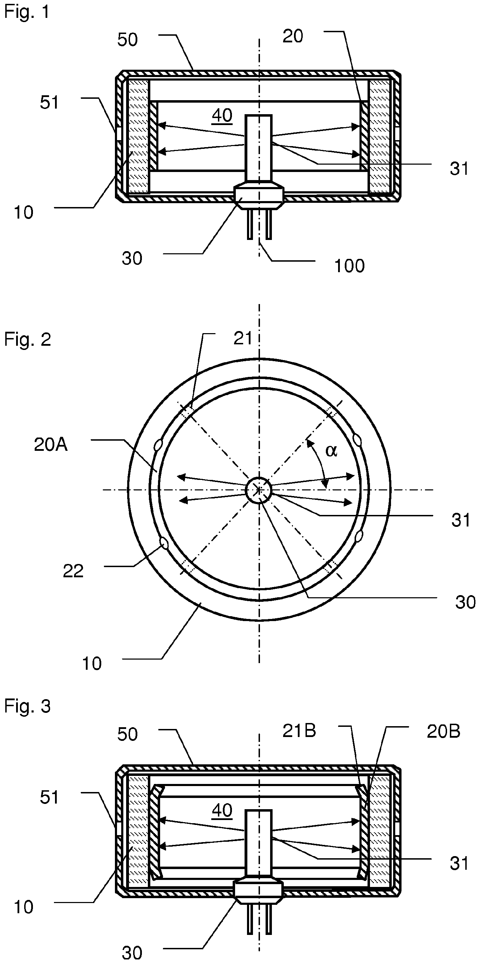

La figure 1 représente un générateur de gaz pyrotechnique qui comprend un boîtier 50 dans lequel est agencé un filtre selon la présente invention avec un matériau filtrant 10 et un écran de protection 20. Le filtre entoure une chambre de combustion 40 qui contient un chargement de propergol non représenté pour des raisons de clarté. Le chargement de propergol est typiquement un chargement en vrac de pastilles. Au centre de la chambre de combustion 40 est agencé un allumeur 30, avec un étui qui comporte deux évents radiaux 31.

Comme le montrent les flèches, les deux évents radiaux 31 sont agencés sur un flanc du cylindre de l'étui de l'allumeur 30, pour éjecter des particules chaudes et des gaz chauds dans une direction radiale par rapport à un axe 100 du générateur de gaz. Ces particules chaudes et gaz chauds se retrouvent alors directement dans la chambre de combustion 40 et dans le chargement de propergol qui s'y trouve.

Cette structure, avec un tel allumeur 30 radial, évite de recourir à une charge pyrotechnique relais entre un allumeur (axial par exemple) et le chargement de propergol. La structure du générateur de gaz est simplifiée, ainsi que sa chaîne pyrotechnique. L'allumeur 30 allume directement le chargement de propergol, sans nécessiter de charge relais dont la matière et les récipients de confinement augmenteraient le coût total du générateur de gaz.

L'écran de protection 20 est judicieusement agencé en regard des évents radiaux 31 de l'allumeur 30, de sorte à protéger le matériau filtrant 10 de l'onde de pression provoquée par l'ouverture des évents radiaux 31, ainsi que du jet violent de gaz chauds et de particules chaudes. L'écran de protection 20 protège en outre le matériau filtrant 10 lors de l'allumage du chargement de propergol. Le risque d'expansion du matériau filtrant 10 du filtre est donc réduit. Le boîtier 50 comprend des tuyères de décharge 51, et l'écran de protection 20 en limitant les risques d'expansion du matériau filtrant 10, empêche ce dernier de venir obstruer, même partiellement les tuyères de décharge 51.

Enfin, l'écran de protection 20, en étant agencé de la sorte en regard des évents radiaux 31, empêche les particules chaudes et les gaz chauds éjectés par l'allumeur 30 d'aller directement dans le matériau filtrant 10, ce qui améliore notablement la répétabilité de l'allumage du propergol. On obtient un cloisonnement de la chambre de combustion 40 avec l'écran de protection 20 qui sépare un espace de chargement de propergol d'une espace de filtration (le matériau filtrant 10), ce dernier présentant un volume mort intrinsèque préjudiciable à l'allumage.

La figure 2 représente une vue de dessus d'une première variante du filtre de la figure 1. Seuls l'allumeur 30 et le filtre avec le matériau filtrant 10 et l'écran de protection 20A sont représentés. L'allumeur 30 comprend toujours deux évents radiaux 31 qui éjectent les particules chaudes et les gaz chauds comme représentés par les flèches.

L'écran de protection 20A est ici un cylindre en tôle pleine qui comprend quatre orifices de passage 21. Pour garantir que l'écran de protection 20A protège efficacement le matériau filtrant 10 de l'onde de pression générée par l'allumeur 30, l'écran de protection 20A est orienté angulairement de sorte qu'un angle α sépare les orifices de passage 21 de la direction d'éjection définie par les évents radiaux 31. Ainsi, les orifices de passage 21 ne sont jamais en regard des évents radiaux 31, ce qui est à respecter quelque soit le nombre d'orifices 21. Les orifices de passage 21 permettent aux gaz issus de la combustion du propergol d'être filtrés par des zones du matériau filtrant 10 qui sont peu ou pas parcourus par ces gaz sans ces orifices de passage 21. Cela permet d'augmenter l'efficacité générale du filtre.

De plus, le matériau filtrant 10 et l'écran de protection 20A sont attachés ensembles par des points de soudure 22. Cette mise en oeuvre est aisée à mettre en oeuvre industriellement et procure une bonne solidité de fabrication. Ainsi, c'est l'écran de protection 20A qui reprend les efforts générés par l'onde de pression (efforts similaires à une pressurisation interne d'un tube), et protège efficacement le matériau filtrant 10 contre une expansion ou déformation.

La figure 3 représente une vue en coupe d'un générateur de gaz pyrotechnique qui comprend un filtre selon une deuxième variante du filtre de la figure 1. Les éléments communs aux deux figures ne seront pas décrits à nouveau. La différence avec la figure 1 réside dans la définition du filtre, et notamment dans la définition de l'écran de protection 20B. Au lieu d'être un cylindre comme sur la figure 1, l'écran de protection 20B présente des extrémités 21B rabattues vers l'intérieur, afin d'obtenir deux effets distincts. D'une part, ces rabats constituent des nervures et rigidifient l'écran de protection 20B pour lui apporter une meilleure résistance contre une ovalisation par exemple. On peut alors soit réduire l'épaisseur pour obtenir la même résistance qu'un cylindre, ou garder la même épaisseur et améliorer la résistance.

D'autre part, cette mise en oeuvre améliore le confinement lors de la phase d'allumage, en redirigeant les particules chaudes et les gaz chauds vers l'intérieur de la chambre de combustion 40, avec les rabats, ce qui a pour effet d'améliorer l'allumage du propergol par les particules chaudes et les gaz chauds de l'allumeur.

Enfin, cette mise en oeuvre permet de diriger les gaz issus du propergol vers la partie central de l'élément filtrant 10 ce qui améliore l'efficacité du filtre.

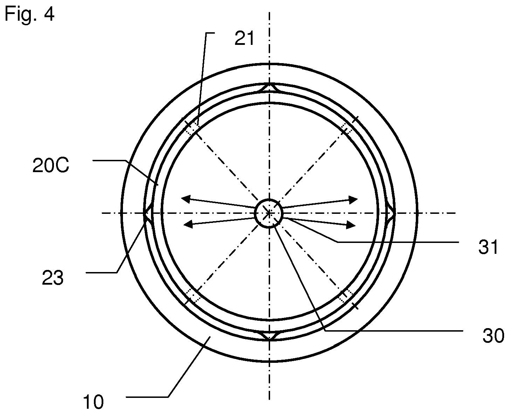

La figure 4 représente une vue de dessus d'une troisième variante du filtre de la figure 1 et du filtre de la figure 2. Les éléments communs à ces figures ne seront pas décrits à nouveau. La différence avec la figure 1 ou 2 réside dans la définition du filtre, et notamment dans la définition de l'écran de protection 20C. Au lieu d'être un cylindre accolé au matériau filtrant 10 comme sur la figure 1 ou 2, l'écran de protection 20C comporte des protrusions 23 (ou des parties en saillie). Ces protrusions 23 permettent de centrer l'écran de protection dans le matériau filtrant de façon ponctuelle et précise, de sorte à ménager un passage supplémentaire pour les gaz de combustion entre l'écran de protection 20C et le matériau filtrant 10 ce qui améliore l'efficacité du filtre.

Enfin, on peut remarquer que sur les figures 1 et 3, l'écran de protection 20 ou 20B respectivement couvre la partie à mi hauteur du matériau filtrant 10. Comme le filtre est notamment maintenu à ses deux extrémités par le générateur de gaz, c'est à mi hauteur que le matériau filtrant 10 peut le plus facilement fléchir et gonfler lors du fonctionnement du générateur de gaz (sous l'effet de l'onde de pression de l'allumeur, puis sous l'effet du passage des gaz de combustion à travers le matériau filtrant 10). Le maintien du filtre à ses deux extrémités est assuré par des zones de contact entre les extrémités du filtre et le boitier 50 lors du fonctionnement du générateur. Les zones de contact empêchent les déplacements radiaux des extrémités du filtre vers l'extérieur du générateur par rapport à l'axe 100 du générateur. Le filtre ne pouvant se déplacer à ses extrémité et étant protégé en son milieu par l'écran de protection, ses déformation sont limitées et l'espace entre le filtre et l'intérieur du boitier au niveau des tuyères de décharge 51 est garanti. Ainsi, l'écran de protection peut être omis dans ces zones. En outre le maintien du filtre dans son extrémité inférieure, c'est-à-dire dans sa partie la plus proche de l'allumeur, permet d'assurer un bon positionnement du filtre lors de l'assemblage du générateur et notamment lors du remplissage de la matière pyrotechnique dans la chambre de combustion 40.

Agencer l'écran de protection à mi hauteur du filtre permet de limiter la flexion du matériau filtrant 10 en réduisant le bras de levier ou le porte à faux par rapport aux extrémités maintenues par le boitier 50. Il en résulte une résistance optimum du filtre lors du fonctionnement, et une déformation moindre. Le risque d'obturation des tuyères 51 est alors supprimé ou réduit.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Générateur de gaz pyrotechnique comprenant :
- un boîtier (50)
- une chambre de combustion (40),
- un chargement de propergol dans la chambre de combustion (40), pour créer des gaz de gonflage d'un coussin de sécurité,
- un allumeur électro-pyrotechnique (30) agencé pour allumer le chargement de propergol,
- un filtre avec deux extrémités, comprenant un matériau filtrant (10) et un écran de protection (20; 20A; 20B; 20C),
dans lequel l'écran de protection (20; 20A; 20B; 20C) forme au moins une boucle scellée agencée pour entourer au moins une partie du chargement de propergol du générateur de gaz pyrotechnique, de sorte à protéger ladite au moins une partie du matériau filtrant (10) d'une onde de pression d'allumage du chargement de propergol,
dans lequel le matériau filtrant (10) présente une hauteur, et dans lequel l'écran de protection (20; 20A; 20B; 20C) recouvre au moins une partie du matériau filtrant (10) située à mi-hauteur,
**caractérisé en ce que** l'écran de protection (20; 20A; 20B; 20C) comprend une bande pleine, et **en ce que** le filtre est maintenu par des zones de contact entre les extrémités du filtre et le boîtier (50), et **en ce que** l'écran de protection (20; 20A; 20B; 20C) est omis dans ces zones.

2. Générateur de gaz pyrotechnique selon la revendication précédente, **caractérisé en ce que** l'allumeur électro-pyrotechnique (30) comprend au moins un évent radial (31), et **en ce que** l'écran de protection (20; 20A; 20B; 20C) est agencé en regard dudit au moins un évent radial (31).

3. Générateur de gaz pyrotechnique selon l'une des revendications précédentes, **caractérisé en ce qu'**il comprend au moins une tuyère de décharge (51), et **en ce que** le matériau filtrant (10) est agencé entre le chargement de propergol et ladite au moins une tuyère de décharge (51).

4. Générateur de gaz pyrotechnique l'une des revendications précédentes, **caractérisé en ce que** le matériau filtrant (10) est agencé au moins en partie autour de l'écran de protection (20; 20A; 20B; 20C), et **en ce que** la boucle scellée est agencée pour résister à un effort d'expansion supérieur à un effort d'expansion du matériau filtrant (10).

5. Générateur de gaz pyrotechnique selon l'une des revendications précédentes, **caractérisé en ce que** l'écran de protection (20; 20A; 20B; 20C) est une pièce support distincte du matériau filtrant (10).

6. Générateur de gaz pyrotechnique selon l'une des revendications précédentes, **caractérisé en ce que** la bande pleine est exempte de trous sur la longueur de la boucle scellée.

7. Générateur de gaz pyrotechnique selon l'une des revendications précédentes, **caractérisé en ce que** le matériau filtrant (10) est attaché à la boucle scellée.

8. Générateur de gaz pyrotechnique selon l'une des revendications précédentes, **caractérisé en ce que** le matériau filtrant (10) présente une forme cylindrique d'une première hauteur, et **en ce que** l'écran de protection (20; 20A; 20B; 20C) protège le matériau filtrant (10) sur une deuxième hauteur supérieure ou égale à la moitié de la première hauteur.

9. Générateur de gaz pyrotechnique selon l'une des revendications précédentes, dans lequel le matériau filtrant (10) est en fil métallique et/ou en tissus métallique et/ou en tricot métallique et/ou en métal déployé et/ou en tôle métallique emboutie.

10. Module de sécurité comprenant au moins un générateur de gaz selon l'une des revendications précédentes.

11. Véhicule automobile comprenant au moins un générateur de gaz selon l'une des revendications 1 à 9.

## Patentansprüche

1. Pyrotechnischer Gasgenerator, umfassend:
- ein Gehäuse (50),
- einen Brennraum (40),
- eine Treibstoffladung in dem Brennraum (40) zum Erzeugen von Füllgasen für einen Airbag,
- einen elektro-pyrotechnischen Zünder (30), der zum Zünden der Treibstoffladung ausgelegt ist,
- einen Filter mit zwei Enden, der ein Filtermaterial (10) und eine Schutzabdeckung (20; 20A; 20B; 20C) umfasst,
wobei die Schutzabdeckung (20; 20A; 20B; 20C) mindestens einen abgedichteten Ring bildet, der so angeordnet ist, dass er zumindest einen Teil der Treibstoffladung des pyrotechnischen Gasgenerators umgibt, sodass der mindestens eine Teil des Filtermaterials (10) vor einer Druckwelle beim Zünden der Treibstoffladung geschützt wird,
wobei das Filtermaterial (10) eine Höhe aufweist und wobei die Schutzabdeckung (20; 20A; 20B; 20C) mindestens einen Teil des Filtermaterials (10) bedeckt, der sich auf halber Höhe befindet,
**dadurch gekennzeichnet, dass** die Schutzabdeckung (20; 20A; 20B; 20C) ein massives Band umfasst, und dadurch, dass der Filter von Kontaktbereichen zwischen den Enden des Filters und dem Gehäuse (50) gehalten wird, und dadurch, dass die Schutzabdeckung (20; 20A; 20B; 20C) in diesen Bereichen fehlt.

2. Pyrotechnischer Gasgenerator nach dem vorhergehenden Anspruch, **dadurch gekennzeichnet, dass** der elektro-pyrotechnische Zünder (30) mindestens eine radiale Entlüftungsöffnung (31) umfasst, und dadurch, dass die Schutzabdeckung (20; 20A; 20B; 20C) gegenüber der mindestens einen radialen Entlüftungsöffnung (31) angeordnet ist.

3. Pyrotechnischer Gasgenerator nach einem der vorhergehenden Ansprüche, **dadurch gekennzeichnet, dass** er mindestens eine Auslassdüse (51) umfasst, und dadurch, dass das Filtermaterial (10) zwischen der Treibstoffladung und der mindestens einen Auslassdüse (51) angeordnet ist.

4. Pyrotechnischer Gasgenerator nach einem der vorhergehenden Ansprüche, **dadurch gekennzeichnet, dass** das Filtermaterial (10) zumindest teilweise um die Schutzabdeckung (20; 20A; 20B; 20C) herum angeordnet ist, und dadurch, dass der abgedichtete Ring so angeordnet ist, dass er einer Ausdehnungskraft standhält, die größer ist als eine Ausdehnungskraft des Filtermaterials (10).

5. Pyrotechnischer Gasgenerator nach einem der vorhergehenden Ansprüche, **dadurch gekennzeichnet, dass** die Schutzabdeckung (20; 20A; 20B; 20C) ein Halteteil getrennt vom Filtermaterial (10) ist.

6. Pyrotechnischer Gasgenerator nach einem der vorhergehenden Ansprüche, **dadurch gekennzeichnet, dass** das massive Band auf der Länge des abgedichteten Rings keine Löcher aufweist.

7. Pyrotechnischer Gasgenerator nach einem der vorhergehenden Ansprüche, **dadurch gekennzeichnet, dass** das Filtermaterial (10) an dem abgedichteten Ring angebracht ist.

8. Gasgenerator nach einem der vorhergehenden Ansprüche, **dadurch gekennzeichnet, dass** das Filtermaterial (10) eine zylindrische Form mit einer ersten Höhe aufweist, und dadurch, dass die Schutzabdeckung (20; 20A; 20B; 20C) das Filtermaterial (10) über eine zweite Höhe größer gleich der Hälfte der ersten Höhe schützt.

9. Pyrotechnischer Gasgenerator nach einem der vorhergehenden Ansprüche, wobei das Filtermaterial (10) aus Metalldraht und/oder aus Metallgewebe und/oder aus Metallgestrick und/oder aus Streckmetall und/oder aus tiefgezogenem Blech besteht.

10. Sicherheitsmodul, das mindestens einen Gasgenerator nach einem der vorhergehenden Ansprüche umfasst.

11. Kraftfahrzeug, das mindestens einen Gasgenerator nach einem der Ansprüche 1 bis 9 umfasst.

## Claims

1. Pyrotechnic gas generator comprising:
- a casing (50),
- a combustion chamber (40).
- a propellant loading in the combustion chamber (40), in order to create inflation gas for an air bag,
- an electro-pyrotechnic igniter (30) arranged so as to ignite the propellant loading,
- a filter with two ends, comprising a filtering material (10) and a protective screen (20; 20A; 20B; 20C),
wherein the protective screen (20; 20A; 20B; 20C) forms at least one sealed loop arranged to surround at said least part of the propellant loading of the pyrotechnic gas generator, so as to protect said at least part of the filtering material (10) from a pressure wave of ignition of the propellant loading,
wherein the filtering material (10) has a height, and wherein the protective screen (20; 20A; 20B; 20C) covers at least part of the filtering material (10) located at mid-height,
**characterized in that** the protective screen (20; 20A; 20B; 20C) comprises a full band and **in that** the filter is held by contact zones between the ends of the filter and the casing (50), and **in that** the protective screen (20; 20A; 20B; 20C) is omitted in these zones.

2. Pyrotechnic gas generator according to the preceding claim, **characterized in that** the electro-pyrotechnic igniter (30) comprises at least one radial vent (31), and **in that** the protective screen (20; 20A; 20B; 20C) is arranged facing said at least one radial vent (31).

3. Pyrotechnic gas generator according to one of the preceding claims, **characterized in that** it comprises at least one discharge nozzle (51), and **in that** the filtering material (10) is arranged between the propellant loading and said at least one discharge nozzle (51).

4. Pyrotechnic gas generator [according to] one of the preceding claims, **characterized in that** the filtering material (10) is arranged at least partly around the protective screen (20; 20A; 20B; 20C), and **in that** the sealed loop is arranged to resist an expansion force greater than an expansion force of the filtering material (10).

5. Pyrotechnic gas generator according to one of the preceding claims, **characterized in that** the protective screen (20; 20A; 20B; 20C) is a supporting piece separate from the filtering material (10).

6. Pyrotechnic gas generator according to one of the preceding claims, **characterized in that** the full band is free of holes along the length of the sealed loop.

7. Pyrotechnic gas generator according to one of the preceding claims, **characterized in that** the filtering material (10) is attached to the sealed loop.

8. Pyrotechnic gas generator according to one of the preceding claims, **characterized in that** the filtering material (10) has a cylindrical shape of a first height, and **in that** the protective screen (20; 20A; 20B; 20C) protects the filtering material (10) up to a second height greater than or equal to half of the first height.

9. Pyrotechnic gas generator according to one of the preceding claims, wherein the filtering material (10) is made of metal wire and/or metal mesh and/or expanded metal and/or pressed sheet metal.

10. Safety module comprising at least one gas generator according to one of the preceding claims.

11. Motor vehicle comprising at least one gas generator according to one of claims 1 to 9.
